# EUROPEAN PATENT SPECIFICATION

(11) **EP 2 000 189 B1**
(45) Date of publication and mention of the grant of the patent: **23.05.2012**
(21) Application number: 07739860.0
(22) Date of filing: 27.03.2007
(51) Int. Cl.: A63F 13/10

(54) **VIDEO IMAGE GENERATING DEVICE, CHARACTER APPEARANCE CHANGING METHOD, INFORMATION RECORDING MEDIUM, AND PROGRAM**
VIDEOBILDERZEUGUNGSVORRICHTUNG, CHARAKTERERSCHEINUNGSÄNDERUNGSVERFAHREN, INFORMATIONSAUFZEICHNUNGSMEDIUM UND PROGRAMM
DISPOSITIF DE GENERATION D'IMAGE VIDEO, PROCEDE DE MODIFICATION D'APPARENCE DE PERSONNAGE, SUPPORT D'ENREGISTREMENT D'INFORMATIONS, ET PROGRAMME

(30) Priority: 29.03.2006 JP 2006089961
(43) Date of publication of application: 10.12.2008
(73) Proprietor: Konami Digital Entertainment Co., Ltd., Tokyo 107-8324 (JP)
(72) Inventor: KOJIMA, Hideo, Minato-ku, Tokyo 107-8324 (JP); NOMURA, Takehiro, Minato-ku, Tokyo 107-8324 (JP); SASAKI, Hideki, Minato-ku, Tokyo 107-8324 (JP); KIMURA, Mineshi, Minato-ku, Tokyo 107-8324 (JP); YOSHIIKE, Hiroaki, Minato-ku, Tokyo 107-8324 (JP)
(74) Representative: Rüger, Barthelt & Abel
(86) International application number: PCT/JP2007/056422
(87) International publication number: WO 2007/116748

(56) References cited:
- JP-A- 10 295 934
- US-A1- 2004 217 961
- US-B1- 6 339 430
- "CUBIVORE - Survival of the Fittest" [Online] 21 February 2002 (2002-02-21), ALTUS , USA , XP002533334 Retrieved from the Internet: URL:http://www.replacementdocs.com/request .php?5838> [retrieved on 2009-06-22] * page 24; figures a-e * & "CUBIVORE" UNKNOWN, 2002,
- FUKUCHI R.: 'Price Quality Teikakaku Soft de Kokomade Dekiru! Sogo Seisaku Hen Doga Sakuhin o Finish!' CG WORLD, WORKS CORPORATION INC. vol. 44, 01 April 2002, pages 56 - 59, XP003018086

## Description

### Technical Field

The present invention relates to a video image generating device, a character appearance changing method, an information recording medium, and a program ideal for suitably changing the appearance of a character, such as the character's clothing or costume.

### Background Art

Game devices (i.e., video game devices) able to execute action games have become widespread. Such action games may involve, for example, the player freely controlling a main character equipped with a weapon such as a gun or sword within a virtual space (i.e., the game field) wherein the main character fights against enemy characters or other game objects. In other words, it can be said that such games are primarily focused on fighting.

Recently, a new conception of action games has become known, wherein instead of being primarily focused on fighting like the above, the main character infiltrates enemy forces, performing espionage or similar activities while hiding oneself.

As one example of action game technology, technology for a video image display method has been disclosed wherein change of the background is appropriately suppressed during battle scenes, thereby preventing the wait time that accompanies reading data from an external storage device (see Patent Literature 1, for example).
Patent Literature 1: Unexamined Japanese Patent Application KOKAI Publication No. 2000-308755 (pgs. 3-5, FIG. 2).

### Disclosure of Invention

### Problem to be Solved by the Invention

In the action games described above, it is known that the appearance of a character, such as the character's clothing or costume, can be arbitrarily changed by the player. For example, in the type of action game described above, wherein the main character performs espionage or similar activities while hiding oneself, the main character's camouflage outfit (i.e., combat uniform) can be appropriately changed by the player.

When changing the camouflage outfit (i.e., appearance) as above, typically the player causes a menu screen to be displayed, and then selects a new camouflage outfit. More specifically, when an arbitrary camouflage outfit is selected, the graphics data (such as the character model) for the main character is reloaded with the camouflage outfit thus selected.
In other words, different graphics data respectively corresponding to a plurality of camouflage types arc prepared in advance, and in response to the player's arbitrary selection, the corresponding graphics data is newly read out.

For this reason, each time the player attempts to change the camouflage outfit, play (i.e., control of the main character) is suspended, a menu screen is displayed, and an outfit suitable for the scene or other factors is selected. For example, when the main character is moving through a jungle, a camouflage outfit having a green-based pattern suitable for that location may be selected, and when the main character later reaches ruins (such as buildings) made of brick, a camouflage outfit having a brick color-based pattern suitable for that location may be re-selected.

Such control is not only cumbersome for the player, but in addition rhythm is broken because play is temporarily suspended. As a result, many players have been unable to maintain good game play performance.
Meanwhile, on the game developer side, a large amount of graphics data for different camouflage outfits must be prepared for the main character, which requires time and effort to create. Moreover, storage volume is expended to the degree that such graphics data is created, and thus in some cases it has been necessary to reduce other graphics data or similar data, or to increase the number of discs or other elements of the recording medium for executing the game.

For this reason, there is a demand for the development of technology appeasing both game players and developers. More specifically, players want the ability to appropriately change (or cause to be changed) the main character's camouflage outfit without suspending play. In addition, developers want to not have to prepare a plurality of graphics data corresponding to camouflage outfits.

US 6 331 430 B1 discloses a technique for synthesizing a texture model. To create an image wherein texture changes from one texture to another, two texture models are read out, and images of the two models are superimposed while changing the respective specified transparency for synthesis. By slowly changing the transparency over time, texture morphing, i.e. one texture slowly changing into another texture, can be implemented.
The Instruction Booklet "CUBIVORE - Survival of the Fittest" [Online] 21 February 2002 (2002-02-21), ALTUS , USA , XP002533334; is a manual of the action-adventure game "Cubivore". In this game the player's character may move through a virtual space and may eat other characters to go through a mutation wherein at least a part of the player's character changes his colour to the colour of the eaten character. The manual also mentions an ability to camouflage the player's character from its enemies. In the game, when the player's character stops after eating raw meat, the appearance of the player's character changes to be equal to that of the ground on which the character stands.

The present invention, being devised in order to solve such problems mentioned above, has as an object to provide a video image generating device, a character appearance changing method, an information recording medium, and a program able to suitably change the appearance of a character.

### Means to Solve the Problem

To achieve the above object, the present invention is defined by the features of independent claims 1, 4, 5 and 6, respectively. Embodiments of present invention are subject-matter of dependent claims.

A video image generating device according to a first aspect of the present invention generates a game image wherein a character object moves on the basis of control input from a player. The video image generating device is made up of an object storage unit, a position storage unit, a determination unit, an object specifying unit, an appearance changing unit, and an image drawing unit.

First, the object storage unit stores a a texture associated with each of the objects, and a material properties parameter representing a roughness or reflectivity parameter associated with each of the objects. In addition, during the game the position storage unit stores a position of each of the objects and a position of the virtual camera. Further, the image drawing unit draws, into the game image, an appearance of each of the objects by referring to the position associated with each of the objects stored in the position storage unit, the texture associated with each of the objects stored in the object storage unit, and the material properties parameter associated with each of the objects stored in the object storage unit. Furthermore, the determination unit determines whether or not the character object has stopped in the virtual space by referring to the position storage unit.
Meanwhile, when the determination unit determines that the character object has stopped, the object specifying unit specifies, from among the non-character objects, a background object behind the character object as viewed from the virtual camera by referring to the position storage unit. In addition, the appearance changing unit selects a standard texture, selects a material properties parameter, stores the selected camouflage pattern as the texture associated with the character object stored in the object storage unit (220), and stores the selected material properties parameter as the roughness or reflexivity associated with the character object stored in the object storage unit.
According to present invention the appearance changing unit selects the material property parameter and an additional camouflage texture of the character object so that it matches the texture and material properties of the specified object, wherein the closer the positions of the specified background object and the character object are, the closer its material properties parameter becomes to the parameters associated with the specified background object stored in the object storage unit, so as to enable drawing the character object based on the selected standard texture, the additional texture, and the changing material properties parameter to better blend into the current background.
In this way, the optimal combination of a camouflage pattern and a parameter corresponding to the object serving as the background is specified, and the appearance of the character object is changed using this combination. In other words, the appearance of the character is changed in accordance with the background. As a result, the appearance of the character can be suitably changed.

The object specifying unit may also specify the object serving as the background while excluding objects that do not satisfy a reference height determined from the height of the character object when the character object is in a stopped state.
In this case, if the height of the character object differs depending on the posture or other character features when stopped, then the object serving as the background can be suitably specified according to the character height.

The appearance changing unit may select the parameter to be combined with a texture differently according To the distance between the character object and the specified object, and change the appearance of the character object such that the material properties of the texture are enhanced as the distance decreases, thereby causing the character object to blend into the object serving as the background.
In this case, the appearance of the character object can be changed such that the material properties of the texture are enhanced to the degree that the character object is stopped at a location near the object serving as the background, thereby causing the character object to blend into the object serving as the background.

A character appearance changing method according to a second aspect of the present invention is used in a video image generating device that generates a game image using an object storage unit and a position storage unit, and wherein a character object moves on the basis of control input from a player. The character appearance changing method includes an object specifying step, an appearance changing step, and an image drawing step.
Herein, the object storage unit stores a texture associated with each of the objects, and a material properties parameter representing a roughness or reflectivity parameter associated with each of the objects. In addition, during the game the position storage unit stores a position of each of the objects and a position of the virtual camera.

The image drawing step draws, into the game image, an appearance of each of the objects by referring to the position associated with each of the objects stored in the position storage unit, the texture associated with each of the objects stored in the object storage unit, and the material properties parameter associated with each of the objects stored in the object storage unit. Furthermore, the determination step determines whether or not the character object has stopped in the virtual space by referring to the position storage unit.
When it has been determined in the determination step that the character object has stopped, the object specifying step specifies, from among the non-character objects, a background object behind the character object as viewed from the virtual camera by referring to the position storage unit. In addition, the appearance changing step selects a standard texture, selects a material properties parameter, stores the selected camouflage pattern as the texture associated with the character object stored in the object storage unit, and stores the selected material properties parameter as the roughness or reflexivity associated with the character object stored in the object storage unit. Subsequently, in the image drawing step, a game image is drawn that includes the character object whose appearance has been changed.
According to present invention the appearance changing step selects the material property parameter and an additional camouflage texture of the character object so that it matches the texture and material properties of the specified object, wherein the closer the positions of the specified background object and the character object are, the closer its material properties parameter becomes to the parameters associated with the specified background object stored in the object storage unit, so as to enable drawing the character object based on the selected standard texture, the additional texture, and the changing material properties parameter to better blend into the current background.
In this way, the optimal combination of a texture and a parameter corresponding to the object serving as the background is specified, and the appearance of the character object is changed using this combination. In other words, the appearance of the character is changed in accordance with the background. As a result, the appearance of the character can be suitably changed.

An information recording medium according to a third aspect of the present invention stores a program that causes a computer (including electronic devices) to function as the video image generating device described above.

A program according to a fourth aspect of the present invention is configured so as to cause a computer (including electronic devices) to function as the video image generating device described above.

The program may be recorded on a computer-readable information recording medium, such as a compact disc, a flexible disk, a hard disk, a magneto-optical disk, a digital video disc, magnetic tape, or semiconductor memory.

The above program may be distributed and sold independently of the computer whereupon the program is executed via a computer communications network. In addition, the above information recording medium may be distributed and sold independently of the computer.

### Effect of the Invention

According to the present invention, the appearance of a character can be suitably changed.

### Brief Description of Drawings

[FIG. 1] A schematic diagram showing the general configuration of a game device according to an embodiment of the present invention.
[FIG. 2] A schematic diagram showing the general configuration of a video image generating device according to an embodiment of the present invention.
[FIG. 3A] A schematic diagram for explaining the appearance of a camouflage outfit while moving.
[FIG. 3B] A schematic diagram for explaining the appearance of a camouflage outfit while stopped.
[FIG. 4] A flowchart showing an example of a character appearance changing process according to an embodiment of the present invention.
[FIG. 5A] A schematic diagram showing an example of a camouflage pattern of a camouflage outfit.
[FIG. 5B] A schematic diagram showing an example of a camouflage pattern of a camouflage outfit.
[FIG. 5C] A schematic diagram showing an example of a camouflage pattern of a camouflage outfit.
[FIG. 6A] A schematic diagram showing the case wherein the character is distant from the object serving as the background.
[FIG. 6B] A schematic diagram showing the case wherein the character is near the object serving as the background.
[FIG. 6C] A schematic diagram showing an example of the appearance due to a change in the material properties parameter when an object is distant.
[FIG. 6D] A schematic diagram showing an example of the appearance due to a change in the material properties parameter when an object is near.

### Explanation of Reference Numerals

- 100: game device
- 101: CPU
- 102: ROM
- 103: RAM
- 104: interface
- 105: controller
- 106: external memory
- 107: DVD-ROM drive
- 108: image processor
- 109: sound processor
- 110: NIC
- 200: video image generating device
- 210: control receiver
- 220: object storage unit
- 230: process control unit
- 231: movement control unit
- 232: background specifying unit
- 233: clothing changing unit
- 240: position information storage unit
- 250: image drawing unit

### Best Mode for Carrying Out the Invention

Hereinafter, embodiments of the present invention will be described. In order to ease understanding of the following, an embodiment wherein the present invention has been applied to a game device will be described. However, the present invention may be similarly applied to a variety of information processing devices, such as a computer, a PDA, or a mobile phone. In other words, the embodiment described hereinafter is for the sake of explanation, and does not limit the scope of the present invention. Consequently, while it is possible for those skilled in the art to adopt embodiments wherein some or all of the elements herein have been replaced with respective equivalents, such embodiments are also to be included within the scope of the present invention.

### (Embodiment 1)

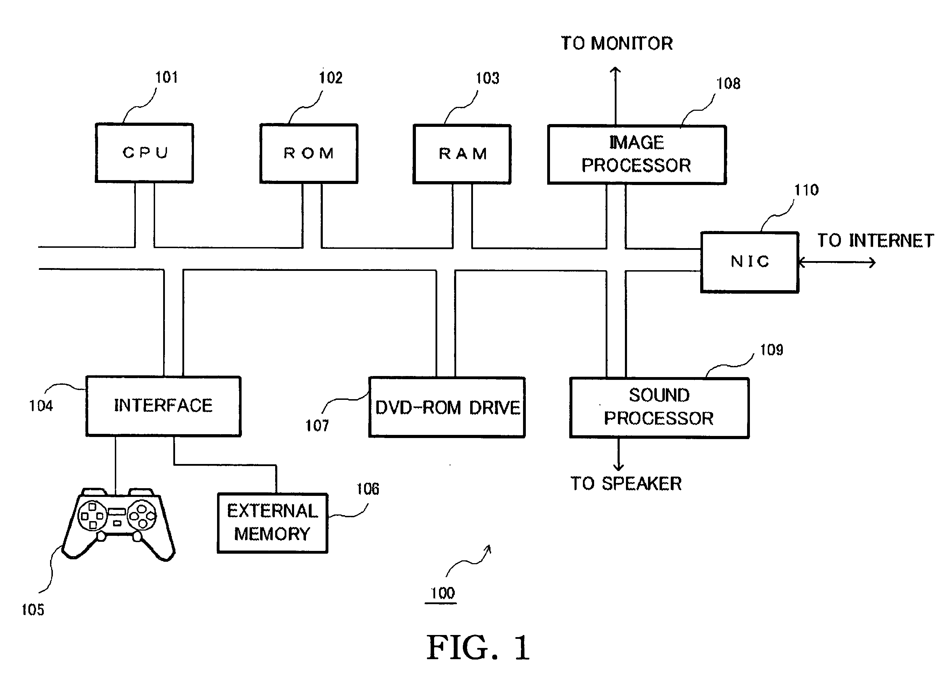

FIG. 1 is a schematic diagram illustrating the general configuration of a typical game device whereby a video image generating according to an embodiment of the present invention is realized. Hereinafter, an embodiment of the present invention will be described with reference to this drawing.

A game device 100 is provided with a CPU (Central Processing Unit) 101, a ROM (Read Only Memory) 102, a RAM (Random Access Memory) 103, an interface 104, a controller 105, an external memory 106, a DVD (Digital Versatile Disc)-ROM drive 107, an image processor 108, a sound processor 109, and an NIC (Network Interface Card) 110.

By inserting a DVD-ROM storing a program and data for a game into the DVD-ROM drive 107 and powering on the game device 100, the program is executed, and the video image generating device of the present embodiment is realized.

The CPU 101 controls the general operation of the game device 100, and is connected to individual components for exchanging control signals and data.

Recorded in the ROM 102 is an IPL (Initial Program Loader), which is executed immediately after power-on. By executing the IPL, the program recorded on the DVD-ROM is read into the RAM 103, and execution of the program by the CPU 101 is commenced. Furthermore, the RAM 102 also stores programs and various data for an operating system necessary for controlling the overall operation of the game device 100.

The RAM 103 is for temporarily storing data and/or programs, and retains the program and/or data read out from the DVD-ROM, as well as data needed for other operations, such as advancing the game or conducting chat communication.

The controller 105, connected via the interface 104, receives control input made when a user plays a game. For example, an A button, a B button, an X button, a Y button, and individual directional buttons (directional keys) indicating four directions may be disposed on the controller 105. When the user presses these buttons, control input is received corresponding to the buttons that were pressed.

The external memory 106, being detachably connected via the interface 104, stores information such as data indicating game progress or chat logs (records), such information being stored in a rewritable manner. By issuing command input via the controller 105, the user can appropriately record such data on the external memory 106.

Recorded on the DVD-ROM loaded into the DVD-ROM drive 107 is the program for realizing the game, as well as graphical and audio data associated with the game. Under the control of the CPU 101, the DVD-ROM drive 107 conducts processing to read out the necessary program and/or data from the DVD-ROM loaded therein. The information so read out is then temporarily stored in the RAM 103 or similar memory.

The image processor 108 processes data read from the DVD-ROM by using the CPU 101 and/or an image operation processor (not shown) provided in the image processor 108, and then records the resulting data in frame memory (not shown) provided in the image processor 108. The image information recorded in the frame memory is then converted into a video signal at a predetermined synchronous timing, and subsequently output to a monitor (not shown) connected to the image processor 108. This enables the display of a variety of images.

The image operation processor herein is able to execute transparency operations such as overlaying two-dimensional images and a blending, as well as various saturation arithmetic calculations at high speeds.
In addition, the image operation processor is also able to execute high-speed computations whereby polygon information, being arranged in a virtual three-dimensional space and having various kinds of texture added thereto, is rendered by means of z-buffering, thereby acquiring a rendered image showing a view of the polygons arranged in the virtual three-dimensional space from a given point of view.

Furthermore, by means of the CPU 101 and the image operation processor operating in conjunction, it is possible to draw a string of characters as a two-dimensional image in the frame memory or on respective polygon surfaces, according to font information that defines the shapes of the characters. Although the font information herein is recorded in the ROM 102, exclusive font information recorded on the DVD-ROM may also be used.

The sound processor 109 converts audio data read out from the DVD-ROM into an analog audio signal, and then causes the audio signal to be output from a speaker (not shown) connected thereto. In addition, under control of the CPU 101, the sound processor 109 also generates sound effects and music data that should be generated as the game progresses, and then causes a speaker to output sounds corresponding thereto.

The NIC 110 serves to connect the game device 100 to the Internet or a similar computer communications network (not shown). The NIC 110 may conform to the 10BASE-T/100BASE-T standard used when forming a LAN (Local Area Network), or alternatively, the NIC 110 may be made up of a modem, such as an analog modem for connecting to the Internet using a telephone circuit, an ISDN (Integrated Services Digital Network) modem, an ADSL (Asymmetric Digital Subscriber Line) modem, or a cable modem for connecting to the Internet using a cable television circuit, as well as an interface (not shown) that interfaces between the CPU 101 and any one of the above modems.

In addition, the game device 100 may also be configured to use a hard disk or similar large-capacity external storage device to perform functions equivalent to components such as the ROM 102, the RAM 103, the external memory 106, and the DVD-ROM loaded into the DVD-ROM drive 107.
Furthermore, a mode may also be employed wherein other devices are connected to the game device 100, such as a keyboard for receiving input for editing character strings from a user, or a mouse for receiving input that specifies various types of positions and makes selections.

Furthermore, it is also possible to use a common computer (such as a general-purpose personal computer) as the video image generating device, rather than the game device 100 of the present embodiment. For example, a common computer is provided with a CPU, RAM, ROM, a DVD-ROM drive, and an NIC, similar to the game device 100. Moreover, a common computer is also provided with an image processor having simplified functions compared to that of the game device 100, as well as a hard disk that acts as an external storage device. Besides the above, a common computer may also be configured to use storage media such as flexible disks, magneto-optical disks, and magnetic tapes. In addition, in a common computer, devices such as a keyboard and mouse are used as input devices, rather than a controller. Furthermore, after installing a game program, a common computer may function as a video image generating device by causing the program to be executed.

### (General Configuration of the Video Image Generating Device)

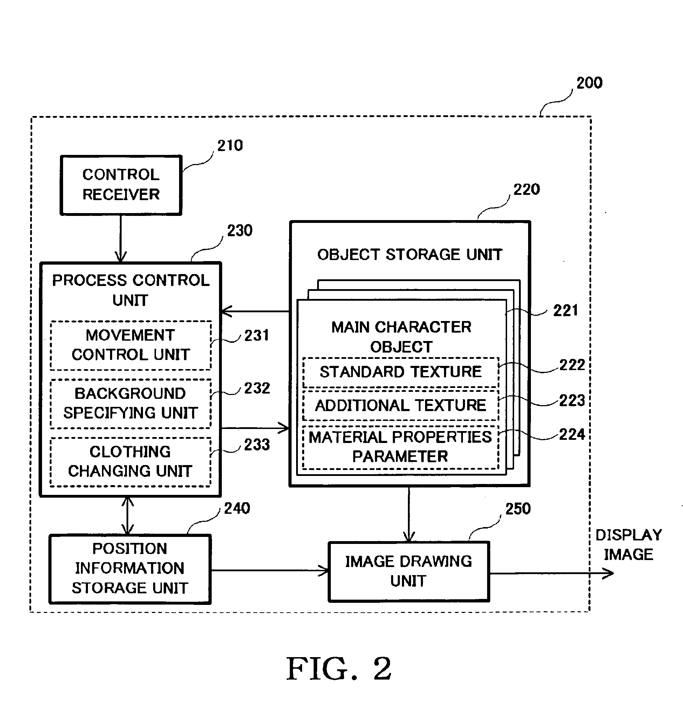

FIG. 2 is a schematic diagram showing the general configuration of a video image generating device according to the present embodiment. By way of example, the video image generating device generates video images containing a character wearing a camouflage outfit as part of an action game, wherein a player-controlled character (i.e., the main character) infiltrates enemy forces, performing espionage or similar activities while hiding oneself. Hereinafter, the above will be described with reference to this drawing.

The video image generating device 200 is provided with a control receiver 210, an object storage unit 220, a process control unit 230, a position information storage unit 240, and an image drawing unit 250.

First, the control receiver 210 receives control input, such as action commands for the main character controlled by the player. For example, the control receiver 210 may receive control input directed at the main character as a result of the player pressing any of a plurality of buttons (as one example, the directional keys, an A button, a B button, an X button, and a Y button disposed on the controller 105) that correspond to certain actions, such as movement in a predetermined direction, pressing up against a wall or other surface, crouching, and lying flat.
The controller 105 herein may function as a control receiver 210 like the above.

The object storage unit 220 stores objects arranged in the virtual space, such as the main character, enemy characters, trees, and buildings or other structures.
As one example, a main character object 221 may include a polygon group (i.e., a primitive) that governs the character shape and similar features, while also including a standard texture 222, an additional texture 223, and a material properties parameter 224.

The standard texture 222 is a texture showing a camouflage pattern (i.e., a colored pattern) of the standard camouflage outfit (i.e., combat uniform) that is applied to (i.e., worn by) the main character.
In addition, the additional texture 223 is a texture showing a replaceable camouflage pattern. In other words, the additional texture 223 is used when changing the camouflage outfit of the main character. The additional texture 223 may contain a plurality of different camouflage patterns.
The material properties parameter 224 is a parameter for determining the material properties of the camouflage outfit. By modifying a variety of variables for factors such as roughness, fibrosity, and reflectivity, a texture can be changed to mimic different materials.

The camouflage outfit of the main character can be appropriately changed so as to blend into the background (i.e., so as to camouflage the main character). More specifically, when an object is specified as serving as the background as described later, the optimal combination of an additional texture 223 and a material properties parameter 224 is appropriately selected according to the specified object. This allows changing the camouflage outfit so that it matches not only the texture, but also the material properties, of the background (i.e., the object serving as the background).
The RAM 103 or similar memory herein may function as an object storage unit 220 like the above.

The process control unit 230 includes the movement control unit 231, the background specifying unit 232, and the clothing changing unit 233, and appropriately controls the video image generating device 200 in general.
The movement control unit 231 modifies the position and other parameters of the main character on the basis of movement or other commands received by the control receiver 210. More specifically, the movement control unit 231 updates the position information for objects such as the main character in the position information storage unit 240 in accordance with a control by the player.

When the main character has stopped (or alternatively, when the main character is moving slowly), the background specifying unit 232 specifies an object positioned behind (i.e., serving as a background of) the main character, the specification being conducted on the basis of the positional relationships between the main character and other objects stored in the position information storage unit 240 (the positional relationships as viewed from a virtual camera, for example).
Furthermore, the background specifying unit 232 may also be configured such that an object is not specified when its height is less than the height of the main character (i.e., the height of the main character's stance when being still) to some degree.

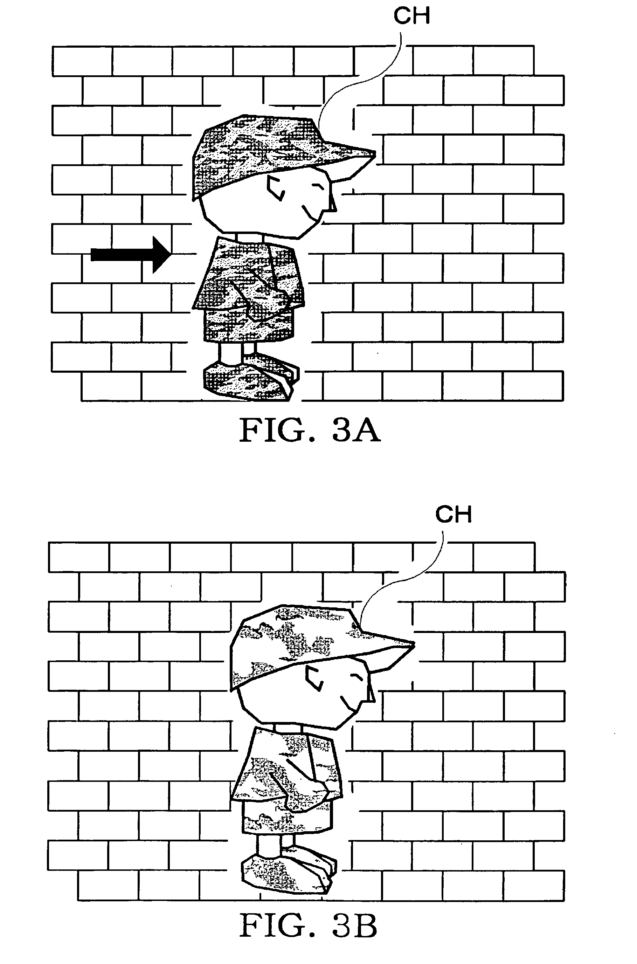

The clothing changing unit 233 appropriately selects the optimal combination of an additional texture 223 and a material properties parameter 224 according to information (such as the texture) on the object specified by the background specifying unit 232, thereby changing the clothing (i.e., the camouflage outfit) of the main character.
For example, if the standard texture 222 is taken to be a camouflage pattern able to blend into tufts of grass (e.g., a woodland pattern), then a camouflaged main character CH is drawn as illustrated in FIG. 3A while moving. If the character subsequently stops at some ruins made of brick, then the clothing changing unit 233 selects a camouflage pattern able to blend into brick (e.g., a desert pattern) from among the textures included in the additional texture 223, while additionally selecting a material properties parameter 224 close to the material properties of brick. Subsequently, the clothing changing unit 233 changes the camouflage outfit of the main character CH, as illustrated in FIG. 3B. In other words, the camouflage outfit is changed to a camouflage outfit having not only a camouflage pattern close to the brick, but also material properties close to that of brick.

Besides the above, the process control unit 230 also conducts control and other processing for enemy characters on the basis of a predetermined logic or other information.
The CPU 101 herein may function as a process control unit 230 like the above.

Returning to FIG. 2, the position information storage unit 240 respectively stores position information for each object within the virtual space. In other words, the position information storage unit 240 manages information such as the current positions of each object, including the main character.
Such objects include objects that move according to control by a player, such as the main character, objects that move according to control or other processing of the process control unit 230, such as enemy characters, as well as objects whose positions do not change, such as trees and buildings. The position information storage unit 240 stores information on elements other than objects, such as the position and other information on the virtual camera.
The RAM 103 or similar memory herein may function as a position information storage unit 240 like the above.

The image drawing unit 250 draws objects stored in the object storage unit 220 (i.e., objects to be drawn) in accordance with the position or other information stored in the position information storage unit 240. In other words, the image drawing unit 250 generates a display image containing the main character.
When drawing the main character, the image drawing unit 250 draws a camouflage outfit on the basis of the combination of an additional texture 223 and a material properties parameter 224 that was selected by the clothing changing unit 233.
The image processor 108 herein may function as an image drawing unit 250 like the above.

### (General Operation of the Video Image Generating Device)

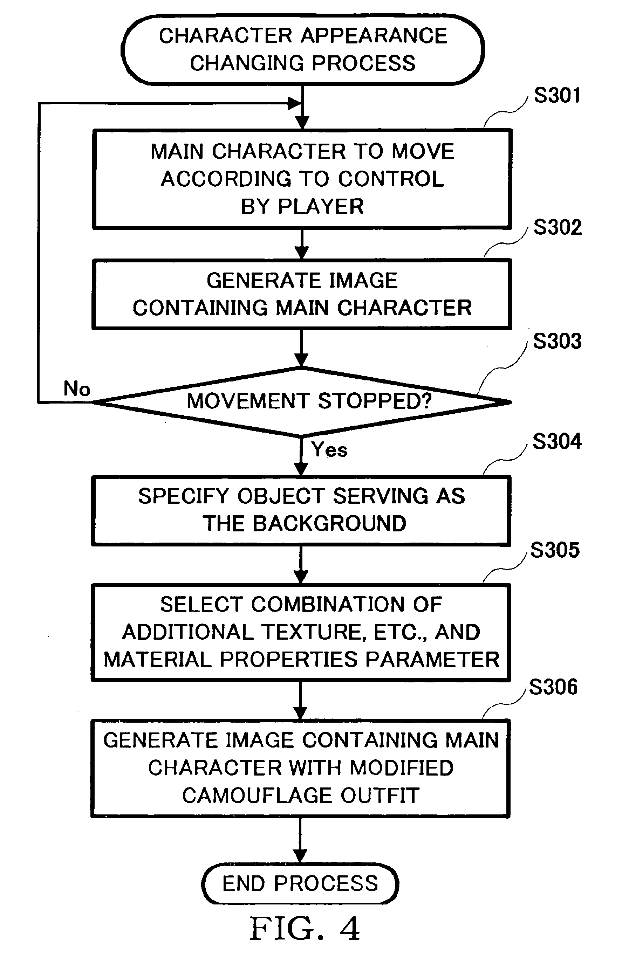

FIG. 4 is a flowchart showing the flow of process for changing the appearance of a character that is executed in a video image generating device 200 configured as described above. Hereinafter, the operation of the video image generating device 200 will be described with reference to this drawing. Herein, the process to change the appearance of a character is a process to automatically change the appearance (i.e., the camouflage outfit) of the main character in an action game.

First, the video image generating device 200 causes the main character to move according to control by a player (step S301). More specifically, the movement control unit 231 updates the position information of the main character stored in the position information storage unit 240 on the basis of control input received by the control receiver 210.

The video image generating device 200 then generates a video image containing the main character (step S302). More specifically, the image drawing unit 250 draws objects stored in the object storage unit 220 (i.e., objects to be drawn) according to the position or other information stored in the position information storage unit 240. At this point, since the main character is moving, the main object is drawn having the camouflage pattern of the standard texture 222.

The video image generating device 200 then determines whether or not the main character has stopped moving (step S303). More specifically, the video image generating device 200 determines whether or not control input from the player has ceased and the main character is stopped.
If the video image generating device 200 determines that the main character has not stopped (step S303; No), then the process returns to the above step S301.

On the other hand, if the video image generating device 200 determines that the main character has stopped (step S303; Yes), then the video image generating device 200 specifies the object serving as the background (step S304). More specifically, the background specifying unit 232 specifies the object positioned behind the main character on the basis of the positional relationships between the main character and other objects stored in the position information storage unit 240.

The video image generating device 200 then selects a combination of an additional texture 223 and a material properties parameter 224 (step S305). More specifically, the clothing changing unit 233 selects the optimal combination of an additional texture 223 and a material properties parameter 224 on the basis of information (such as the texture) of the object specified by the background specifying unit 232.

The video image generating device 200 then generates a video image containing the main character whose camouflage outfit has changed (step S306). More specifically, since the main character has stopped, the image drawing unit 250 draws the main character wearing a camouflage outfit having a camouflage pattern that has been changed according to the object serving as the background of the main character.

As a result of such processing to change the appearance of a character, the optimal combination of an additional texture 223 and a material properties parameter 224 is selected according to the object serving as the background. This allows changing the camouflage outfit so that it matches not only the texture, but also the material properties, of the object serving as the background.
As a result, the appearance of a character can be suitably changed.

Moreover, from the player's perspective, the camouflage outfit of the main character can be appropriately changed without suspending game play. Meanwhile, from the game developer's perspective, there is no need to prepare a plurality of graphics data corresponding to camouflage outfits.

### (Other Embodiments)

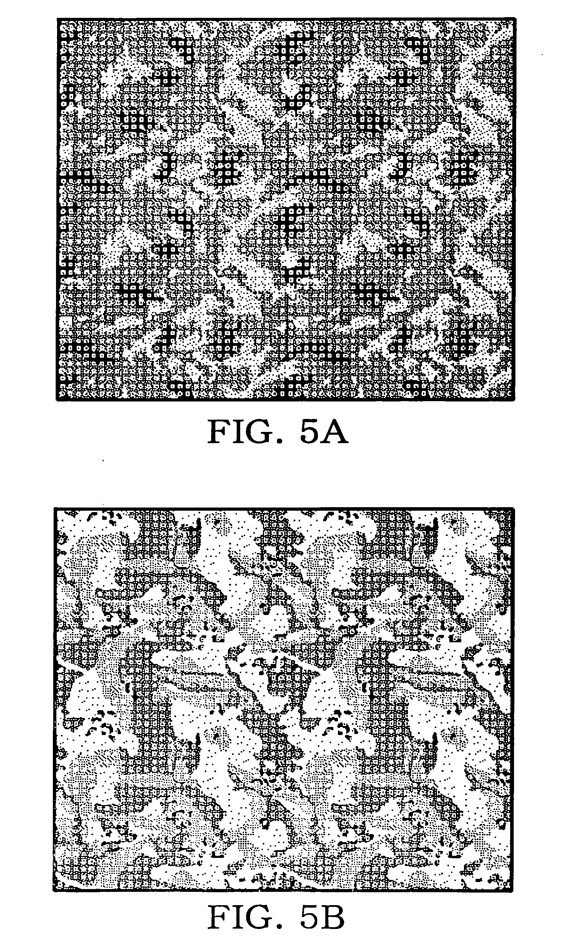

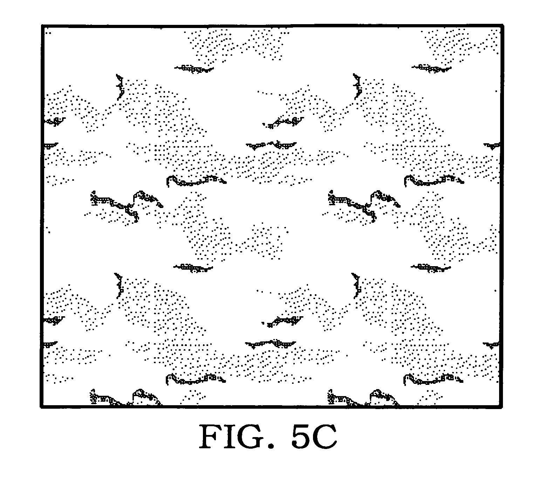

In the foregoing embodiment, the case was described wherein, when the main character stops, the camouflage outfit is changed immediately (instantaneously) according to the object serving as the background. However, the camouflage outfit may also be changed gradually as a predetermined time elapses.
For example, if the main character is wearing a camouflage outfit able to blend into tufts of grass and has stopped at ruins made of brick, the camouflage pattern shown in FIG. 5A (i.e., the camouflage pattern able to blend into tufts of grass) need not suddenly be changed into a camouflage pattern able to blend into brick, like that shown in FIG. 5C. Rather, the camouflage outfit may be gradually changed by way of changing to an intermediate camouflage pattern like that shown in FIG. 5B during the transition. Furthermore, in this case, the material properties parameter may also be gradually changed to a parameter near that of brick.

More specifically, when the background specifying unit 232 specifies the object positioned behind the main character, the clothing changing unit 233 appropriately selects both the optimal combination of an additional texture 223 and material properties parameter 224, as well as a combination of an additional texture 223 and a material properties parameter 224 used during the transition (i.e., a combination able to yield an intermediate pattern, for example), the selection of the above combinations being conducted according to information (such as the texture) on the specified object. The main character is then first drawn wearing a transition camouflage outfit by means of the transitional combination of an additional texture 223 and a material properties parameter 224. Subsequently, the main character is drawn wearing the optimal camouflage outfit. In other words, the camouflage outfit gradually changes.
Moreover, the transitional camouflage outfit (i.e., the texture, etc.) is not limited to one, and may also be a plurality of camouflage outfits. In other words, the invention may be configured such that the camouflage outfit is changed into a plurality of types of camouflage outfits, ultimately changing into an optimal camouflage outfit able to blend into the current background.

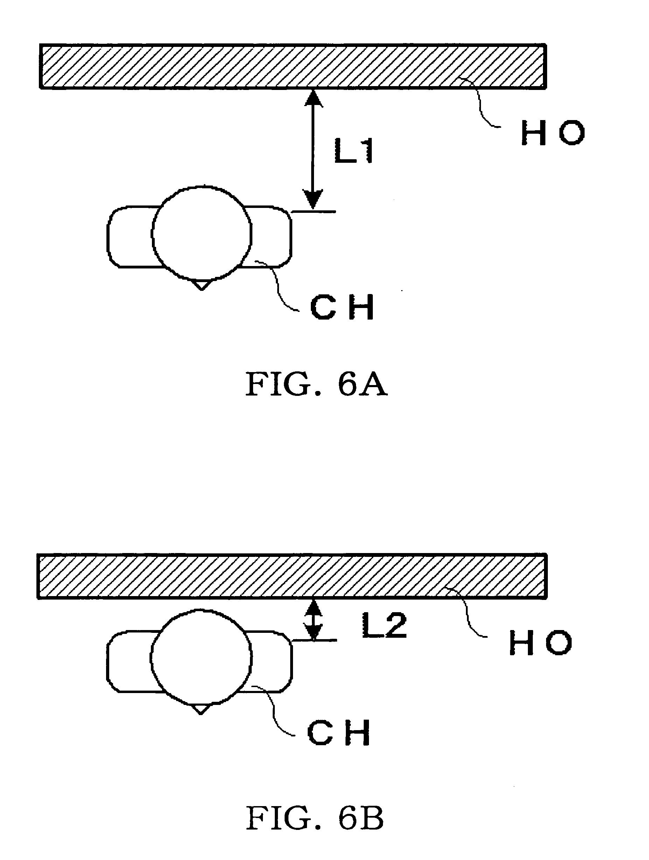

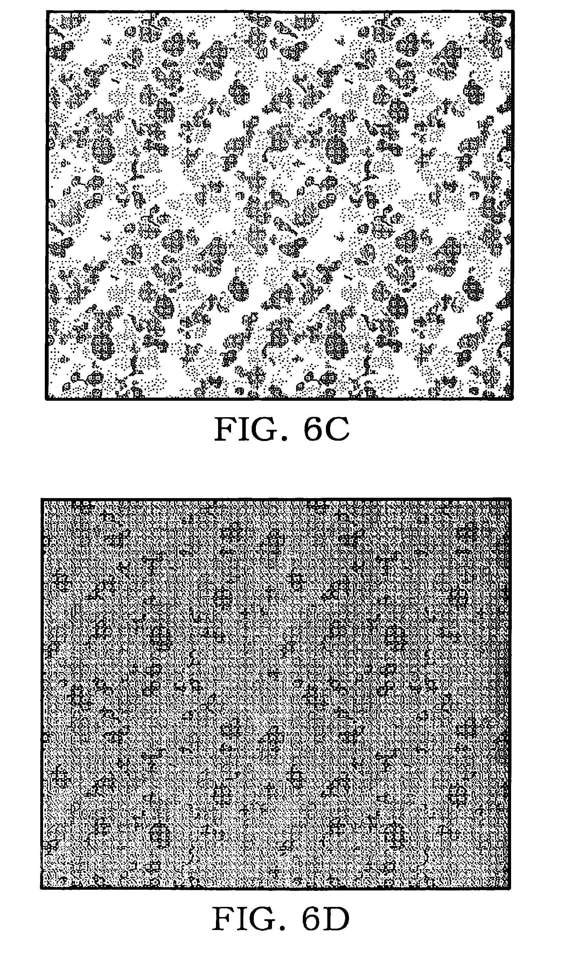

In the foregoing embodiment, the case was described wherein, when the object serving as the background is specified, the camouflage outfit is uniformly changed in accordance with that object. However, the invention may also be configured such that the camouflage outfit is modified by changing factors such as the material properties parameter according to the positional relationship (the distance, for example) between the main character and the object serving as the background.
For example, as shown in FIGS. 6A and 6B (being viewed from above), even if the main character CH stops in front of the same object HO, the distance between the main character CH and the object HO may differ. In this case, the material properties parameter is changed in accordance with this distance. More specifically, if the distance L1 is large, as shown in FIG. 6A, then the camouflage outfit is modified to be like that shown in FIG. 6C, using a value for the material properties parameter that is not very close to that of the object HO. On the other hand, as shown in FIG. 6B, when the distance L2 is small, then the camouflage outfit is modified to be like that shown in FIG. 6D, using a value for the material properties parameter close to that of the object HO.
In this case, as shown in FIG. 6D, approaching the object HO serving as the background causes the material properties of the camouflage outfit to become similar to those of the object, thereby enabling the main character to better blend into the background (i.e., the camouflage is rendered more effective).

In the foregoing embodiment, the case was described wherein the clothing (i.e., the camouflage outfit) of the main character is changed. However, so long as the appearance of a character is modified, then the present invention is not limited to features such as clothing or costumes, and is arbitrary. For example, it is also possible to appropriately adapt the present invention to the patterns or other features of characters such as animals.

As described in the foregoing, according to the present invention, the appearance of a character can thus be suitably changed.

### Industrial Applicability

As described in the foregoing, according to the present invention, a video image generating device, a character appearance changing method, an information recording medium, and a program can be provided, the above being ideal for suitably changing the appearance of a character.

## Claims

1. A video image generating device that generates a game image depicting a virtual space viewed from a virtual camera, the virtual space containing objects, the objects including a character object and non-character objects, the character object moving in accordance with control input from a user, comprising:
an object storage unit (220) that stores a texture associated with each of the objects, and a material properties parameter representing a roughness or reflectivity parameter associated with each of the objects;
a position storage unit (240) that stores a position of each of the objects and a position of the virtual camera;
an image drawing unit (250) that draws, into the game image, an appearance of each of the objects by referring to the position associated with each of the objects stored in the position storage unit (240), the texture associated with each of the objects stored in the object storage unit (220), and the material properties parameter associated with each of the objects stored in the object storage unit (220),
a determination unit (230) that determines whether or not the character object has stopped in the virtual space by referring to the position storage unit (240);
an object specifying unit (232) that specifies, from among the non-character objects, a background object behind the character object as viewed from the virtual camera by referring to the position storage unit (240), when it is determined that the character object has stopped;
an appearance changing unit (233) that selects a standard texture, selects a material properties parameter, stores the selected camouflage pattern as the texture associated with the character, object stored in the object storage unit (220), and stores the selected material properties parameter as the roughness or reflexivity associated with the character object stored in the object storage unit (220),
**characterized in that**
the appearance changing unit (223) selects the material property parameter and an additional camouflage texture of the character object so that it matches the texture and material properties of the specified object, wherein the closer the positions of the specified background object and the character object are, the closer its material properties parameter becomes to the parameters associated with the specified background object stored in the object storage unit, so as to enable drawing the character object based on the selected standard texture, the additional texture, and the changing material properties parameter to better blend into the current background.

2. The video image generating device according to claim 1, wherein
the object specifying unit (232) specifies the background object from among the non-character objects whose heights are not less than a height of the character object.

3. The video image generating device according to claim 1, wherein
the appearance changing unit (233) obtains the texture associated with the character object when it is determined that the character object has stopped, and stores, as the texture associated with the character object, a transitional texture that gradually changes from the obtained texture to the camouflage pattern during a predetermined elapse time.

4. A character appearance changing method for a video image generating device that uses an object storage unit (220) and a position storage unit (240) to generate a game image depicting a virtual space viewed from a virtual camera, the virtual space containing objects, the objects including a character object and non-character objects, the character object moving in accordance with control input from a user, wherein
the object storage unit (220) stores a texture associated with each of the objects, and a material properties parameter representing a roughness or reflectivity parameter associated with each of the objects;
the position storage unit (240) stores a position of each of the objects and a position of the virtual camera,
the method comprising:
an image drawing step (S306) that draws, into the game image, an appearance of each of the objects by referring to the position associated with each of the objects stored in the position storage unit (240), the texture associated with each of the objects stored in the object storage unit (220), and the material properties parameter associated with each of the objects stored in the object storage unit (220),
a determination step (S303) that determines whether or not the character object has stopped in the virtual space by referring to the position storage unit (240);
an object specifying step (S304) that specific, from among the non-character objects, a background object behind the character object as viewed from the virtual camera by referring to the position storage unit (240), when it is determined that the character object has stopped;
an appearance changing step (S305) that selects a standard texture, selects a material properties parameter, stores the selected camouflage pattern as the texture associated with the character object stored in the object storage unit (220), and stores the selected material properties parameter as the roughness or reflexivity associated with the character object stored in the object storage unit (220),
**characterized in that**
the appearance changing step (S305) selects the material property parameter and an additional camouflage texture of the character object so that it matches the texture and material properties of the specified object, wherein the closer the positions of the specified background object and the character object arc, the closer its material properties parameter becomes to the parameters associated with the specified background object stored in the object storage unit, so as to enable drawing the character object based on the selected standard texture, the additional texture, and the changing material properties parameter to better blend into the current background.

5. An information recording medium storing a program for controlling a computer, the computer generating a game image depicting a virtual space viewed from a virtual camera, the virtual space containing objects, the objects including a character object and non-character objects, the character object moving in accordance with control input from a user, the program causing the computer to function as:
an object storage unit (220) that stores a texture associated with each of the objects, and a material properties parameter representing a roughness or reflectivity parameter associated with each of the objects;
a position storage unit (240) that stores a position of each of the objects and a position of the virtual camera;
an image drawing unit (250) that draws, into the game image, an appearance of each of the objects by referring to the position associated with each of the objects stored in the position storage unit (240), the texture associated with each of the objects stored in the object storage unit (220), and the material properties parameter associated with each of the objects stored in the object storage unit (220),
a determination unit (230) that determines whether or not the character object has stopped in the virtual space by referring to the position storage unit (240);
an object specifying unit (232) that specifies, from among the non-character objects, a background object behind the character object as viewed from the virtual camera by referring to the position storage unit (240), when it is determined that the character object has stopped;
an appearance changing unit (233) that selects a standard texture, selects a material properties parameter, stores the selected camouflage pattern as the texture associated with the character object stored in the object storage unit (220), and stores the selected material properties parameter as the roughness or reflexivity associated with the character object stored in the object storage unit (220),
**characterized in that**
the appearance changing unit (223) selects the material property parameter and an additional camouflage texture of the character object so that it matches the texture and material properties of the specified object, wherein the closer the positions of the specified background object and the character object are, the closer its material properties parameter becomes to the parameters associated with the specified background object stored in the object storage unit, so as to enable drawing the character object based on the selected standard texture, the additional texture, and the changing material properties parameter to better blend into the current background.

6. A program for controlling a computer, the computer generating a game image depicting a virtual space viewed from a virtual camera, the virtual space containing objects, the objects including a character object and non-character objects, the character object moving in accordance with control input from a user, the program causing the computer to function as:
an object storage unit (220) that stores a texture associated with each of the objects, and a material properties parameter representing a roughness or reflectivity parameter associated with each of the objects;
a position storage unit (240) that stores a position of each of the objects and a position of the virtual camera;
an image drawing unit (250) that draws, into the game image, an appearance of each of the objects by referring to the position associated with each of the objects stored in the position storage unit (240), the texture associated with each of the objects stored in the object storage unit (220), and the material properties parameter associated with each of the objects stored in the object storage unit (220),
a determination unit (230) that determines whether or not the character object has stopped in the virtual space by referring to the position storage unit (240);
an object specifying unit (232) that specifies, from among the non-character objects, a background object behind the character object as viewed from the virtual camera by referring to the position storage unit (240), when it is determined that the character object has stopped;
an appearance changing unit (233) that selects a standard texture, selects a material properties parameter, stores the selected camouflage pattern as the texture associated with the character object stored in the object storage unit (220), and stores the selected material properties parameter as the roughness or reflexivity associated with the character object stored in the object storage unit (220),
**characterized in that**
the appearance changing unit (223) selects the material property parameter and an additional camouflage texture of the character object so that it matches the texture and material properties of the specified object, wherein the closer the positions of the specified background object and the character object are, the closer its material properties parameter becomes to the parameters associated with the specified background object stored in the object storage unit, so as to enable drawing the character object based on the selected standard texture, the additional texture, and the changing material properties parameter to better blend into the current background.

## Patentansprüche

1. Videobilderzeugungsvorrichtung, die ein Bild eines Spiels erzeugt, das einen von einer virtuellen Kamera betrachteten virtuellen Raum darstellt, wobei der virtuelle Raum Objekte enthält, wobei die Objekte ein Spielfigurobjekt und Nicht-Spielfigurobjekte enthält, wobei sich das Spielfigurobjekt entsprechend einer Steuereingabe von einem Bediener bewegt, die aufweist:
eine Objektspeichereinheit (220), die eine Textur, die jedem der Objekte zugeordnet ist, und einen Materialeigenschaftsparameter speichert, der einen Rauheits- oder Reflektivitätsparameter repräsentiert, der jedem der Objekte zugeordnet ist;
eine Positionsspeichereinheit (240), die eine Position jedes der Objekte und eine Position der virtuellen Kamera speichert;
eine Bildzeicheneinheit (250), die in das Bild des Spiels ein Erscheinungsbild jedes der Objekte einzeichnet, indem sie auf die jedem der Objekte zugeordnete Position, die in der Positionsspeichereinheit (240) gespeichert ist, die jedem der Objekte zugeordnete Textur, die in der Objektspeichereinheit (220) gespeichert ist, und den jedem der Objekte zugeordneten Materialeigenschaftsparameter, der in der Objektspeichereinheit (220) gespeichert ist, zurückgreift,
eine Bestimmungseinheit (230), die bestimmt, ob das Spielfigurobjekt in dem virtuellen Raum angehalten hat oder nicht, indem sie auf die Positionsspeichereinheit (240) zurückgreift;
eine Objektspezifikationseinheit (232), die unter den Nicht-Spielfigurobjekten ein Hintergrundobjekt hinter dem Spielfigurobjekt, betrachtet von der virtuellen Kamera aus, spezifiziert, indem sie auf die Positionsspeichereinheit (240) zurückgreift, wenn festgestellt wird, dass das Spielfigurobjekt angehalten hat;
eine Erscheinungsänderungseinheit (233), die eine Standardtextur auswählt, einen Materialeigenschaftsparameter auswählt, das ausgewählte Tarnmuster als die dem Spielfigurobjekt zugeordnete Textur speichert, die in der Objektspeichereinheit (220) gespeichert ist, und den ausgewählten Materialeigenschaftsparameter als die dem Spielfigurobjekt zugeordnete Rauheit oder Reflektivität speichert, die in der Objektspeichereinheit (220) gespeichert ist,
**dadurch gekennzeichnet, dass**
die Erscheinungsänderungseinheit (223) den Materialeigenschaftsparameter und eine zusätzliche Tarntextur des Spielfigurobjektes derart auswählt, dass dieser bzw. diese mit der Textur und den Materialeigenschaften des spezifizierten Objektes übereinstimmt, wobei je näher die Positionen des spezifizierten Hintergrundobjektes und des Spielfigurobjektes aneinander liegen, desto ähnlicher sein Materialeigenschaftsparameter zu den dem spezifizierten Hintergrundobjekt zugeordneten Parametern wird, die in der Objektspeichereinheit gespeichert sind, um so ein Zeichnen des Spielfigurobjektes auf der Basis der ausgewählten Standardtextur, der zusätzlichen Textur und dem sich ändernden Materialeigenschaftsparameter zu ermöglichen, um dieses besser an den momentanen Hintergrund optisch anzugleichen.

2. Videobilderzeugungsvorrichtung nach Anspruch 1, wobei
die Objektspezifikationseinheit (232) das Hintergrundobjekt unter den Nicht-Spielfigurobjekten spezifiziert, deren Höhen nicht kleiner sind als eine Höhe des Spielfigurobjektes.

3. Videobilderzeugungsvorrichtung nach Anspruch 1, wobei
die Erscheinungsänderungseinheit (233) die Textur erhält, die dem Spielfigurobjekt zugeordnet ist, wenn festgestellt wird, dass das Spielfigurobjekt angehalten hat, und als die Textur, die dem Spielfigurobjekt zugeordnet ist, eine Übergangstextur speichert, die sich während einer vorbestimmten Ablaufzeit allmählich von der erhaltenen Textur zu dem Tarnmuster verändert.

4. Spielfigurerscheinungsänderungsverfahren für eine Videobilderzeugungsvorrichtung, die eine Objektspeichereinheit (220) und eine Positionsspeichereinheit (240) verwendet, um ein Bild eines Spiels zu erzeugen, das einen von einer virtuellen Kamera betrachteten virtuellen Raum darstellt, wobei der virtuelle Raum Objekte enthält, wobei die Objekte ein Spielfigurobjekt und Nicht-Spielfigurobjekte enthält, wobei sich das Spielfigurobjekt entsprechend einer Steuereingabe von einem Bediener bewegt, wobei
die Objektspeichereinheit (220) eine Textur, die jedem der Objekte zugeordnet ist, und einen Materialeigenschaftsparameter speichert, der einen Rauheits- oder Reflektivitätsparameter repräsentiert, der jedem der Objekte zugeordnet ist;
die Positionsspeichereinheit (240) eine Position von jedem der Objekte und eine Position der virtuellen Kamera speichert;
wobei das Verfahren aufweist:
einen Bildzeichnungsschritt (S306), der in das Bild des Spiels ein Erscheinungsbild von jedem der Objekte einzeichnet, indem er auf die jedem der Objekte zugeordnete Position, die in der Positionsspeichereinheit (240) gespeichert ist, die jedem der Objekte zugeordnete Textur, die in der Objektspeichereinheit (220) gespeichert ist, und den jedem der Objekte zugeordneten Materialeigenschaftsparameter zurückgreift, der in der Objektspeichereinheit (220) gespeichert ist,
einen Bestimmungsschritt (S303), der bestimmt, ob das Spielfigurobjekt in dem virtuellen Raum angehalten hat oder nicht, indem er auf die Positionsspeichereinheit (240) zurückgreift;
einen Objektspezifikationsschritt (S304), der unter den Nicht-Spielfigurobjekten ein Hintergrundobjekt hinter dem Spielfigurobjekt, betrachtet von der virtuellen Kamera aus, spezifiziert, indem er auf die Positionsspeichereinheit (240) zurückgreift, wenn festgestellt wird, dass das Spielfigurobjekt angehalten hat;
einen Erscheinungsänderungsschritt (S305), der eine Standardtextur auswählt, einen Materialeigenschaftsparameter auswählt, das ausgewählte Tarnmuster als die dem Spielfigurobjekt zugeordnete Textur speichert, die in der Objektspeichereinheit (220) gespeichert ist, und den ausgewählten Materialeigenschaftsparameter als die dem Spielfigurobjekt zugeordnete Rauheit oder Reflektivität speichert, die in der Objektspeichereinheit (220) gespeichert ist,
**dadurch gekennzeichnet, dass**
der Erscheinungsänderungsschritt (S305) den Materialeigenschaftsparameter und eine zusätzliche Tarntextur des Spielfigurobjektes derart auswählt, dass diese mit der Textur und den Materialeigenschaften des spezifizierten Objektes übereinstimmen, wobei je näher die Positionen des spezifizierten Hintergrundobjektes und des Spielfigurobjektes aneinander liegen, desto ähnlicher sein Materialeigenschaftsparameter den dem spezifizierten Hintergrundobjekt zugeordneten Parametern werden, die in der Objektspeichereinheit gespeichert sind, um so ein Zeichnen des Spielfigurobjektes auf der Basis der ausgewählten Standardtextur, der zusätzlichen Textur und des sich ändernden Materialeigenschaftsparameters zu ermöglichen, um dieses besser an den momentanen Hintergrund optisch anzugleichen.

5. Informationsaufzeichnungsmedium, das ein Programm zur Steuerung eines Computers speichert, wobei der Computer ein Bild eines Spiels erzeugt, das einen von einer virtuellen Kamera betrachteten virtuellen Raum darstellt, wobei der virtuelle Raum Objekte enthält, wobei die Objekte ein Spielfigurobjekt und Nicht-Spielfigurobjekte enthalten, wobei sich das Spielfigurobjekt gemäß einer Steuereingabe von einem Bediener bewegt, wobei das Programm den Computer veranlasst, zu funktionieren als:
eine Objektspeichereinheit (220), die eine Textur, die jedem der Objekte zugeordnet ist, und einen Materialeigenschaftsparameter speichert, der einen Rauheits- oder Reflektivitätsparameter repräsentiert, der jedem der Objekte zugeordnet ist;
eine Positionsspeichereinheit (240), die eine Position jedes der Objekte und eine Position der virtuellen Kamera speichert;
eine Bildzeicheneinheit (250), die in das Bild des Spiels ein Erscheinungsbild jedes der Objekte einzeichnet, indem sie auf die jedem der Objekte zugeordnete Position, die in der Positionsspeichereinheit (240) gespeichert ist, die jedem der Objekte zugeordnete Textur, die in der Objektspeichereinheit (220) gespeichert ist, und den jedem der Objekte zugeordneten Materialeigenschaftsparameter, der in der Objektspeichereinheit (220) gespeichert ist, zurückgreift,
eine Bestimmungseinheit (230), die bestimmt, ob das Spielfigurobjekt in dem virtuellen Raum angehalten hat oder nicht, indem sie auf die Positionsspeichereinheit (240) zurückgreift;
eine Objektspezifikationseinheit (232), die unter den Nicht-Spielfigurobjekten ein Hintergrundobjekt hinter dem Spielfigurobjekt, betrachtet von der virtuellen Kamera aus, spezifiziert, indem sie auf die Positionsspeichereinheit (240) zurückgreift, wenn festgestellt wird, dass das Spielfigurobjekt angehalten hat;
eine Erscheinungsänderungseinheit (233), die eine Standardtextur auswählt, einen Materialeigenschaftsparameter auswählt, das ausgewählte Tarnmuster als die dem Spielfigurobjekt zugeordnete Textur speichert, die in der Objektspeichereinheit (220) gespeichert ist, und den ausgewählten Materialeigenschaftsparameter als die dem Spielfigurobjekt zugeordnete Rauheit oder Reflektivität speichert, die in der Objektspeichereinheit (220) gespeichert ist,
**dadurch gekennzeichnet, dass**
die Erscheinungsänderungseinheit (223) den Materialeigenschaftsparameter und eine zusätzliche Tarntextur des Spielfigurobjektes derart auswählt, dass dieser bzw. diese mit der Textur und den Materialeigenschaften des spezifizierten Objektes übereinstimmt, wobei je näher die Positionen des spezifizierten Hintergrundobjektes und des Spielfigurobjektes aneinander liegen, desto ähnlicher sein Materialeigenschaftsparameter zu den dem spezifizierten Hintergrundobjekt zugeordneten Parametern wird, die in der Objektspeichereinheit gespeichert sind, um so ein Zeichnen des Spielfigurobjektes auf der Basis der ausgewählten Standardtextur, der zusätzlichen Textur und dem sich ändernden Materialeigenschaftsparameter zu ermöglichen, um dieses besser an den momentanen Hintergrund optisch anzugleichen.

6. Programm zur Steuerung eines Computers, wobei der Computer ein Bild eines Spiels erzeugt, das einen von einer virtuellen Kamera betrachteten virtuellen Raum darstellt, wobei der virtuelle Raum Objekte enthält, wobei die Objekte ein Spielfigurobjekt und Nicht-Spielfigurobjekte enthalten, wobei sich das Spielfigurobjekt gemäß einer Steuereingabe von einem Bediener bewegt, wobei das Programm den Computer veranlasst, zu funktionieren als:
eine Objektspeichereinheit (220), die eine Textur, die jedem der Objekte zugeordnet ist, und einen Materialeigenschaftsparameter speichert, der einen Rauheits- oder Reflektivitätsparameter repräsentiert, der jedem der Objekte zugeordnet ist;
eine Positionsspeichereinheit (240), die eine Position jedes der Objekte und eine Position der virtuellen Kamera speichert;
eine Bildzeicheneinheit (250), die in das Bild des Spiels ein Erscheinungsbild jedes der Objekte einzeichnet, indem sie auf die jedem der Objekte zugeordnete Position, die in der Positionsspeichereinheit (240) gespeichert ist, die jedem der Objekte zugeordnete Textur, die in der Objektspeichereinheit (220) gespeichert ist, und den jedem der Objekte zugeordneten Materialeigenschaftsparameter, der in der Objektspeichereinheit (220) gespeichert ist, zurückgreift,
eine Bestimmungseinheit (230), die bestimmt, ob das Spielfigurobjekt in dem virtuellen Raum angehalten hat oder nicht, indem sie auf die Positionsspeichereinheit (240) zurückgreift;
eine Objektspezifikationseinheit (232), die unter den Nicht-Spielfigurobjekten ein Hintergrundobjekt hinter dem Spielfigurobjekt, betrachtet von der virtuellen Kamera aus, spezifiziert, indem sie auf die Positionsspeichereinheit (240) zurückgreift, wenn festgestellt wird, dass das Spielfigurobjekt angehalten hat;
eine Erscheinungsänderungseinheit (233), die eine Standardtextur auswählt, einen Materialeigenschaftsparameter auswählt, das ausgewählte Tarnmuster als die dem Spielfigurobjekt zugeordnete Textur speichert, die in der Objektspeichereinheit (220) gespeichert ist, und den ausgewählten Materialeigenschaftsparameter als die dem Spielfigurobjekt zugeordnete Rauheit oder Reflektivität speichert, die in der Objektspeichereinheit (220) gespeichert ist,
**dadurch gekennzeichnet, dass**
die Erscheinungsänderungseinheit (223) den Materialeigenschaftsparameter und eine zusätzliche Tarntextur des Spielfigurobjektes derart auswählt, dass dieser bzw. diese mit der Textur und den Materialeigenschaften des spezifizierten Objektes übereinstimmt, wobei je näher die Positionen des spezifizierten Hintergrundobjektes und des Spielfigurobjektes aneinander liegen, desto ähnlicher sein Materialeigenschaftsparameter zu den dem spezifizierten Hintergrundobjekt zugeordneten Parametern wird, die in der Objektspeichereinheit gespeichert sind, um so ein Zeichnen des Spielfigurobjektes auf der Basis der ausgewählten Standardtextur, der zusätzlichen Textur und dem sich ändernden Materialeigenschaftsparameter zu ermöglichen, um dieses besser an den momentanen Hintergrund optisch anzugleichen.

## Revendications

1. Dispositif de génération d'image vidéo générant une image de jeu représentant un espace virtuel vu depuis une caméra virtuelle, l'espace virtuel contenant des objets, les objets comprenant un objet de personnage et des objets non personnages, l'objet de personnage se déplaçant en fonction d'entrées de commande provenant d'un utilisateur, comprenant :
une unité de stockage d'objets (220) qui stocke une texture associée à chacun des objets, et un paramètre de propriétés de matière représentant un paramètre de rugosité ou de réflectivité associé à chacun des objets ;
une unité de stockage de positions (240) qui stocke une position de chacun des objets et une position de la caméra virtuelle ;
une unité de dessin d'images (250) qui dessine, dans l'image de jeu, une apparence de chacun des objets en se référant à la position associée à chacun des objets stockés dans l'unité de stockage de positions (240), la texture associée à chacun des objets stockés dans l'unité de stockage d'objets (220) et le paramètre de propriétés de matière associé à chacun des objets stockés dans l'unité de stockage d'objets (220),
une unité de détermination (230) qui détermine si l'objet de personnage s'est ou non arrêté dans l'espace virtuel en se référant à l'unité de stockage de positions (240) ;
une unité de spécification d'objets (232) qui spécifie, parmi les objets non personnages, un objet d'arrière-plan derrière l'objet de personnage vu depuis la caméra virtuelle en se référant à l'unité de stockage de positions (240), quand il est déterminé que l'objet de personnage s'est arrêté ;
une unité de changement d'apparence (233) qui choisit une texture standard, qui choisit un paramètre de propriétés de matière, qui stocke le motif de camouflage choisi en tant que texture associée à l'objet de personnage stocké dans l'unité de stockage d'objets (220), et qui stocke le paramètre de propriétés de matière choisi en tant que rugosité ou réflexivité associée à l'objet de personnage stocké dans l'unité de stockage d'objets (220),
**caractérisé en ce que** :
l'unité de changement d'apparence (223) choisit le paramètre de propriétés de matière et une texture de camouflage additionnelle de l'objet de personnage de telle manière qu'elle corresponde à la texture et aux propriétés de matière de l'objet spécifié, dans lequel plus les positions de l'objet d'arrière-plan spécifié et de l'objet de personnage sont proches, plus son paramètre de propriétés de matière se rapproche des paramètres associés à l'objet d'arrière-plan spécifié stocké dans l'unité de stockage d'objets, afin de permettre le dessin de l'objet de personnage basé sur la texture standard choisie, la texture additionnelle et le paramètre de propriétés de matière changeant pour mieux se fondre dans l'arrière-plan courant.

2. Dispositif de génération d'image vidéo selon la revendication 1, dans lequel l'unité de spécification d'objets (232) spécifie l'objet d'arrière-plan parmi les objets non personnages dont la hauteur n'est pas inférieure à une hauteur de l'objet de personnage.

3. Dispositif de génération d'image vidéo selon la revendication 1, dans lequel l'unité de changement d'apparence (233) obtient la texture associée à l'objet de personnage quand il est déterminé que l'objet de personnage s'est arrêté, et stocke, comme texture associée à l'objet de personnage, une texture de transition qui change progressivement de la texture obtenue au motif de camouflage pendant un laps de temps prédéterminé.

4. Procédé de changement d'apparence de personnage pour un dispositif de génération d'image vidéo qui utilise une unité de stockage d'objets (220) et une unité de stockage de positions (240) pour générer une image de jeu représentant un espace virtuel vu depuis une caméra virtuelle, l'espace virtuel contenant des objets, les objets comprenant un objet de personnage et des objets non personnages, l'objet de personnage se déplaçant en fonction d'entrées de commande provenant d'un utilisateur, dans lequel :
l'unité de stockage d'objets (220) stocke une texture associée à chacun des objets, et un paramètre de propriétés de matière représentant un paramètre de rugosité ou de réflectivité associé à chacun des objets ;
l'unité de stockage de positions (240) stocke une position de chacun des objets et une position de la caméra virtuelle ;
le procédé comprenant :
une étape de dessin d'image (S306) qui dessine, dans l'image de jeu, une apparence de chacun des objets en se référant à la position associée à chacun des objets stockés dans l'unité de stockage de positions (240), la texture associée à chacun des objets stockés dans l'unité de stockage d'objets (220) et le paramètre de propriétés de matière associé à chacun des objets stockés dans l'unité de stockage d'objets (220),
une étape de détermination (S303) qui détermine si l'objet de personnage s'est ou non arrêté dans l'espace virtuel en se référant à l'unité de stockage de positions (240) ;
une étape de spécification d'objets (S304) qui spécifie, parmi les objets non personnages, un objet d'arrière-plan derrière l'objet de personnage vu depuis la caméra virtuelle en se référant à l'unité de stockage de positions (240), quand il est déterminé que l'objet de personnage s'est arrêté ;
une étape de changement d'apparence (S305) qui choisit une texture standard, qui choisit un paramètre de propriétés de matière, qui stocke le motif de camouflage choisi en tant que texture associée à l'objet de personnage stocké dans l'unité de stockage d'objets (220), et qui stocke le paramètre de propriétés de matière choisi en tant que rugosité ou réflexivité associée à l'objet de personnage stocké dans l'unité de stockage d'objets (220),
**caractérisé en ce que** :
l'étape de changement d'apparence (S305) choisit le paramètre de propriétés de matière et une texture de camouflage additionnelle de l'objet de personnage de telle manière qu'elle corresponde à la texture et aux propriétés de matière de l'objet spécifié, dans lequel plus les positions de l'objet d'arrière-plan spécifié et de l'objet de personnage sont proches, plus son paramètre de propriétés de matière se rapproche des paramètres associés à l'objet d'arrière-plan spécifié stocké dans l'unité de stockage d'objets, afin de permettre le dessin de l'objet de personnage basé sur la texture standard choisie, la texture additionnelle et le paramètre de propriétés de matière changeant pour mieux se fondre dans l'arrière-plan courant.

5. Support d'enregistrement d'informations stockant un programme destiné à commander un ordinateur, l'ordinateur générant une image de jeu représentant un espace virtuel vu depuis une caméra virtuelle, l'espace virtuel contenant des objets, les objets comprenant un objet de personnage et des objets non personnages, l'objet de personnage se déplaçant en fonction d'entrées de commande provenant d'un utilisateur, le programme faisant fonctionner l'ordinateur en tant que :
unité de stockage d'objets (220) qui stocke une texture associée à chacun des objets, et un paramètre de propriétés de matière représentant un paramètre de rugosité ou de réflectivité associé à chacun des objets ;
unité de stockage de positions (240) qui stocke une position de chacun des objets et une position de la caméra virtuelle ;
unité de dessin d'images (250) qui dessine, dans l'image de jeu, une apparence de chacun des objets en se référant à la position associée à chacun des objets stockés dans l'unité de stockage de positions (240), la texture associée à chacun des objets stockés dans l'unité de stockage d'objets (220) et le paramètre de propriétés de matière associé à chacun des objets stockés dans l'unité de stockage d'objets (220),
unité de détermination (230) qui détermine si l'objet de personnage s'est ou non arrêté dans l'espace virtuel en se référant à l'unité de stockage de positions (240) ;
unité de spécification d'objets (232) qui spécifie, parmi les objets non personnages, un objet d'arrière-plan derrière l'objet de personnage vu depuis la caméra virtuelle en se référant à l'unité de stockage de positions (240), quand il est déterminé que l'objet de personnage s'est arrêté ;
unité de changement d'apparence (233) qui choisit une texture standard, qui choisit un paramètre de propriétés de matière, qui stocke le motif de camouflage choisi en tant que texture associée à l'objet de personnage stocké dans l'unité de stockage d'objets (220), et qui stocke le paramètre de propriétés de matière choisi en tant que rugosité ou réflexivité associée à l'objet de personnage stocké dans l'unité de stockage d'objets (220),
**caractérisé en ce que** :
l'unité de changement d'apparence (223) choisit le paramètre de propriétés de matière et une texture de camouflage additionnelle de l'objet de personnage de telle manière qu'elle corresponde à la texture et aux propriétés de matière de l'objet spécifié, dans lequel plus les positions de l'objet d'arrière-plan spécifié et de l'objet de personnage sont proches, plus son paramètre de propriétés de matière se rapproche des paramètres associés à l'objet d'arrière-plan spécifié stocké dans l'unité de stockage d'objets, afin de permettre Je dessin de l'objet de personnage basé sur la texture standard choisie, la texture additionnelle et le paramètre de propriétés de matière changeant pour mieux se fondre dans l'arrière-plan courant.

6. Programme destiné à commander un ordinateur, l'ordinateur générant une image de jeu représentant un espace virtuel vu depuis une caméra virtuelle, l'espace virtuel contenant des objets, les objets comprenant un objet de personnage et des objets non personnages, l'objet de personnage se déplaçant en fonction d'entrées de commande provenant d'un utilisateur, le programme faisant fonctionner l'ordinateur en tant que :
unité de stockage d'objets (220) qui stocke une texture associée à chacun des objets, et un paramètre de propriétés de matière représentant un paramètre de rugosité ou de réflectivité associé à chacun des objets ;
unité de stockage de positions (240) qui stocke une position de chacun des objets et une position de la caméra virtuelle ;
unité de dessin d'images (250) qui dessine, dans l'image de jeu, une apparence de chacun des objets en se référant à la position associée à chacun des objets stockés dans l'unité de stockage de positions (240), la texture associée à chacun des objets stockés dans l'unité de stockage d'objets (220) et le paramètre de propriétés de matière associé à chacun des objets stockés dans l'unité de stockage d'objets (220),
unité de détermination (230) qui détermine si l'objet de personnage s'est ou non arrêté dans l'espace virtuel en se référant à l'unité de stockage de positions (240) ;
unité de spécification d'objets (232) qui spécifie, parmi les objets non personnages, un objet d'arrière-plan derrière l'objet de personnage vu depuis la caméra virtuelle en se référant à l'unité de stockage de positions (240), quand il est déterminé que l'objet de personnage s'est arrêté ;
unité de changement d'apparence (233) qui choisit une texture standard, qui choisit un paramètre de propriétés de matière, qui stocke le motif de camouflage choisi en tant que texture associée à l'objet de personnage stocké dans l'unité de stockage d'objets (220), et qui stocke le paramètre de propriétés de matière choisi en tant que rugosité ou réflexivité associée à l'objet de personnage stocké dans l'unité de stockage d'objets (220),
**caractérisé en ce que** :
l'unité de changement d'apparence (223) choisit le paramètre de propriétés de matière et une texture de camouflage additionnelle de l'objet de personnage de telle manière qu'elle corresponde à la texture et aux propriétés de matière de l'objet spécifié, dans lequel plus les positions de l'objet d'arrière-plan spécifié et de l'objet de personnage sont proches, plus son paramètre de propriétés de matière se rapproche des paramètres associés à l'objet d'arrière-plan spécifié stocké dans l'unité de stockage d'objets, afin de permettre le dessin de l'objet de personnage basé sur la texture standard choisie, la texture additionnelle et le paramètre de propriétés de matière changeant pour mieux se fondre dans l'arrière-plan courant.
